# EUROPEAN PATENT SPECIFICATION

(11) **EP 4 430 407 B1**
(45) Date of publication and mention of the grant of the patent: **19.08.2026**
(21) Application number: 22814362.4
(22) Date of filing: 08.11.2022
(51) Int. Cl.: G01N 35/00, B01L 9/06

(54) **PRIORITIZING OF BIOLOGICAL SAMPLES DURING AUTOMATIC PROCESSING**
PRIORITISIERUNG VON BIOLOGISCHEN PROBEN BEI DER AUTOMATISIERTEN ANALYSE
PRIORITISATION D'ÉCHANTILLONS BIOLOGIQUES PENDANT L'ANALYSE AUTOMATIQUE

(30) Priority: 08.11.2021 GB 202116022
(43) Date of publication of application: 18.09.2024
(73) Proprietor: Randox Laboratories Ltd., Crumlin, County Antrim BT29 4QY (GB)
(72) Inventor: FAWL, Stephen, Crumlin Antrim BT29 4QY (GB); BELL, Colin, Crumlin Antrim BT29 4QY (GB)
(74) Representative: Gill Jennings & Every LLP
(86) International application number: PCT/EP2022/081168
(87) International publication number: WO 2023/079181

(56) References cited:
- EP-A2- 2 244 092
- JP-A- H03 172 764

## Description

### FIELD OF INVENTION

The present invention relates to improvements to the processing of biological samples.

### BACKGROUND

Testing of patient conditions is typically carried out by collecting biological samples from patients and sending those samples for testing and analysis at a lab. In order to provide test results to patients, a record must be kept of which patient a biological sample is associated with. The results of the testing and analysis of that sample are then, likewise, associated with the correct patient who can be informed of the test result.

To this end, traditional systems associate biological samples with unique identifiers, for example in the form of a barcode. When the results of testing or analysis have been obtained, the unique identifiers are then used to provide those results to the correct patients. The unique identifiers also make it possible to identify whether a sample has been safely received at a laboratory for processing.

However, although traditional systems are capable of identifying when a sample is safely received, they are limited in the degree to which they can monitor the processing of biological samples and are therefore not suited to preventing biological samples from expiring prior to testing. This is problematic because biological samples are typically only stable for a short period of time after they have been collected, which is often just a few days. Furthermore, processing of the samples can affect their stability, which is especially disadvantageous when repeat testing of samples is required. Since traditional systems do not monitor the stability of biological samples, the processing of those samples cannot be adequately controlled to ensure that samples do not expire.

In order to reduce the rate of biological samples expiring during processing, what is needed are improvements to the processing of biological samples.

In the prior art, EP2244092 relates to a sample analyser comprising a first measurement unit and a second measurement unit; and JPH03172764 relates to an analyser for automatically analysing a plurality of samples.

### SUMMARY

According to a first aspect of the invention, a method of monitoring and controlling the processing of biological samples is provided. The method comprises the steps of: receiving a plurality of sample containers, each containing biological material; assigning a priority to each of the sample containers; queueing the sample containers for analysis based on the assigned priorities; extracting a biological sample from each of the plurality of sample containers, based on said sample container's position in the queue; analysing each biological sample; providing either a valid result or an inconclusive result for each of the biological samples based on said analysing; for each biological sample for which an inconclusive result has been provided, assigning a new priority to the respective sample container and repeating the queueing, extracting, analysing, and providing steps; and characterized in that the method further comprises: freezing one or more sample containers in the plurality of sample containers after a biological sample has been extracted from said one or more sample containers; and if an inconclusive result is provided, defrosting the sample container prior to extracting a new biological sample.

In the method of the first aspect, a priority is assigned to a biological sample which reflects the stability of that sample, with samples closer to expiry typically given a higher priority than samples further from expiry. This priority is not fixed, however, as although the stability of a biological sample is closely related to the age of that sample, it can also be impacted by the processing steps that sample undergoes. Therefore, when an inconclusive result is provided following analysis of a sample, which is an indication that analysis of the sample needs to be repeated, the biological sample is assigned a new priority. This new priority is taken into account when repeating the queueing step to ensure that the biological sample does not expire before the analysis can be repeated.

One advantage of this method of monitoring and controlling the processing of biological samples is therefore that the prioritisation of biological samples ensures that samples which are closer to expiring can be prioritised when queueing samples for analysis. This applies to both samples undergoing analysis for the first time and samples undergoing repeat analysis. By monitoring the processing of a biological sample from receipt to the provision of a valid result, the processing of that biological sample can be controlled to avoid expiry.

A further benefit of the present invention is that the queueing of biological samples can improve the throughput of machines used for analysing biological samples, thereby improving the efficiency of the processing of biological samples.

As noted above, analysis of the biological samples typically reduces the stability of said biological samples. The step of assigning a new priority to a sample container corresponding to a biological sample for which an inconclusive result has been provided therefore usually comprises increasing the priority assigned to said sample container. This heightened priority will then be factored into the queueing of biological samples for analysis to ensure that biological samples which have undergone analysis already are placed ahead of new, more stable biological samples in the queue. Indeed, it is preferable for assigning a new priority to comprise assigning the highest priority to sample containers for which the steps of queueing, extracting, analysing, and providing are to be repeated. This priority is advantageously higher than that assigned to newly received sample containers such that sample containers requiring repeat analysis are prioritised above newly received sample containers.

It will be apparent at this stage that the priority assigned to a sample container may act as an indicator of the stability of the biological material in that sample container, with higher priorities indicating that the biological material is closer to expiring. The exact form of the priorities taken will vary, and could be a traffic light system in which green indicates a highly stable sample, yellow a sample which is closer to expiry, and red a sample which has likely expired already. For example, in an advantageous embodiment, a green priority could be assigned to sample containers containing biological material collected less than 38 hours ago, a yellow priority to sample containers containing biological material collected less than 77 hours ago, and a red priority to sample containers containing biological material collected less than 115 hours ago. The assigned priority could also take the form of a numerical value. For the avoidance of doubt, in the case of a numerical value a higher priority could be indicated by a lower numerical value, in which case the step of increasing the priority assigned to a biological sample would correspond to lowering the numerical priority value.

In such embodiments, the priority assigned to each sample container is based on the age of the biological material in said sample container. In addition, the priority could be based on the urgency with which a result of analysing a sample is required.

As noted above, the method further comprises freezing one or more sample containers of the plurality of sample containers after a biological sample has been extracted from said one or more sample containers. The primary benefit of freezing a sample container is that it slows down decomposition of biological material in that container. This is useful if a sample which is close to expiry needs to undergo further analysis, in which case the frozen sample can be defrosted and a new sample extracted, but it may also be advantageous to keep sample containers for a period of time after analysis.

In order to improve the efficiency of analysing biological samples, queueing the sample containers for analysis may comprise sorting the sample containers into two or more batches of sample containers based on the respective priorities assigned to each of the sample containers. In this way, samples in a batch can be analysed in parallel, thereby improving the efficiency of the processing of the biological samples.

In order to further improve the efficiency of sample analysis, analysing each biological sample may comprise pooling the biological samples extracted from the sample containers in at least one of said two or more batches of sample containers. This pooling may take the form of amalgamating the biological samples, or may take the form of extracting sub-samples of each biological sample in a batch and amalgamating these sub-samples. The step of analysing the biological samples then takes the form of analysing the pooled, which is to say amalgamated, samples. If a valid result is provided then, depending on the result provided, this valid result may be associated with each of the biological samples in the batch. However, there may be occasions where the analysis is successful but an inconclusive result is nevertheless provided indicating that the biological samples in the batch need to be analysed individually, in which case a new priority is assigned to each biological sample in the batch and the steps queueing, extracting, analysing, and providing steps are repeated.

Pooling of samples is particularly advantageous when a valid result takes the form of either the presence or absence of a biological factor in the biological sample. For example, in the case of a test for a disease the analysis may take the form of a test leading to a positive or negative result. If a negative result is provided, a negative result can be associated with all of the biological samples in the batch. However, if a positive result is provided then the biological samples in the batch may need to be re-tested, in which case an inconclusive result is provided.

Typically, receiving a plurality of sample containers comprises decontaminating the plurality of sample containers. This reduces the risk of contamination when processing biological samples.

It is not always possible to ensure that all sample containers received for processing contain biological material which would allow for useful analysis. As such, receiving a plurality of sample containers often comprises a quality control process of: determining whether the biological material in any of the plurality of sample containers has expired, has been damaged, and/or has been contaminated; and discarding any sample containers for which the biological material contained therein has expired, has been damaged, and/or has been contaminated. Receiving a plurality of sample containers may also comprise: determining whether any of the plurality of sample containers has been damaged; and discarding any sample containers which have been damaged. In cases where a sample container is discarded, the patient or user who provided the biological material in the sample container may be informed that the sample container was discarded. For the avoidance of doubt, the expression "damaged" should be understood to cover any defects to a sample container which could negatively impact the possibility for useful analysis to be carried out on the biological material therein. For example, in the case of a biological sample tube a leak due to a loose lid may lead to some biological material being lost.

Discarding sample containers in which the biological material has expired, has been damaged, and/or has been contaminated, for example due to the sample container leaking, has at least two benefits. The first is that the risk of contaminating the biological samples extracted from other sample containers is reduced, and the second is that the efficiency of the processing of biological samples is improved by not processing any sample containers containing biological material which would not allow for useful analysis. Likewise, it is advantageous to discard any sample containers which have been damaged since this indicates that the biological material may have been damaged and/or contaminated. However, in some embodiments sample containers which have been damaged may undergo further inspection to identify whether the biological material therein can be recovered. This inspection will typically involve checking whether there is sufficient biological material in the damaged sample containers to allow for useful analysis, with the amount of biological material required depending on the analysis to be performed. The sample container is then sanitised and either the damage is rectified or the biological material is transferred to a new sample container. For example, in the case of a loose lid on a biological sample tube, rectifying the damage comprises re-tightening the lid.

In many instances the method will be carried out in a sample prioritisation system comprising multiple stations, with different steps of the method performed at each of the stations. In one such embodiment the plurality of sample containers are received at a first station of a sample prioritisation system; the step of assigning a priority to each of the sample containers comprises, for each sample container, simultaneously registering the sample container and moving the sample container to from the first station to a second station of the sample prioritisation system; and the step of queuing the sample containers occurs at the second station of the sample prioritisation system. By simultaneously registering a sample container while it is moved between stations, the throughput process may advantageously be increased. For example, a robotic arm or mechanical gripper may be configured to move each sample container between the first and second stations whilst said sample container is scanned by a juxtaposed scanning device in order to register the sample container.

Notably, the registration of a sample container in such embodiments occurs while the sample container is moving. As will be understood, this is superior to moving sample containers to a static registration station to be scanned before moving them on to the second station of the sample prioritisation system.

Also described herein is an apparatus for use in decontaminating biological sample tubes, such as test tubes. The apparatus comprises: a rack comprising a plurality of apertures for receiving biological sample tubes; and a frame for supporting said rack, the frame comprising: support elements for supporting the rack from below; and legs for holding the support elements at a height such that when the apparatus is provided on a flat surface the biological sample tubes received by the rack are suspended above said flat surface, the legs being separated to provide a space so as to expose biological sample tubes received by the rack to a fluid directed at the apparatus.

The space between the legs of the frame allows biological sample tubes provided in the rack to be exposed to fluid, such as decontamination fluid directed at the apparatus. This in turn allows substantially the whole surface of each biological sample tube to be contacted by the fluid, which in the case of decontamination fluid means that full decontamination of the biological sample tubes can be ensured.

Also described herein is a method of decontaminating biological sample tubes. The method comprises: providing one or more biological sample tubes in a rack comprising a plurality of apertures for receiving biological sample tubes; providing said rack on a first frame, the first frame comprising: support elements for supporting the rack from below; and legs for holding the support elements at a height such that when the apparatus is provided on a flat surface the biological sample tubes received by the rack are suspended above said flat surface, the legs being separated to provide a space so as to expose biological sample tubes received by the rack to a fluid directed at the apparatus; conveying the frame through a decontamination chamber while directing a decontamination fluid at the biological sample tubes from two or more sides of the frame so as to expose substantially the whole surface of each biological sample tube to said decontamination fluid; removing the rack from the first frame; providing the rack on a second frame.

In this method, by exposing substantially the whole surface of each biological sample tube to a decontamination fluid, full decontamination of the biological sample tubes can be ensured.

### BRIEF DESCRIPTION OF THE FIGURES

The invention will now be described with reference to the figures, in which:
Figure 1 shows a flowchart of the steps of an embodiment of a method of monitoring and controlling the processing of biological samples;
Figure 2 shows a flowchart illustrating the process of receiving a plurality of biological samples in more detail;
Figure 3 shows a decontamination machine used in embodiments of the present invention; and
Figures 4a, 4b, and 4c show an apparatus for use in decontaminating biological sample tubes according to an embodiment of the invention.

### DETAILED DESCRIPTION

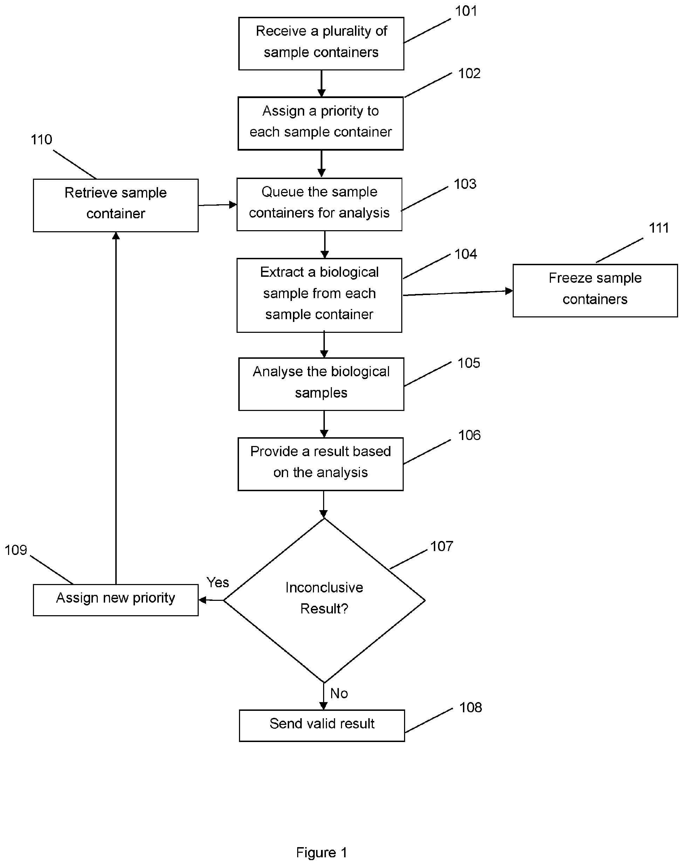

The typical steps of a method of monitoring and controlling the processing of biological samples are shown in Figure 1. Some of these steps are optional and are not present in all embodiments of the invention. In the following description, the terms "user" and "patient" are interchangeable.

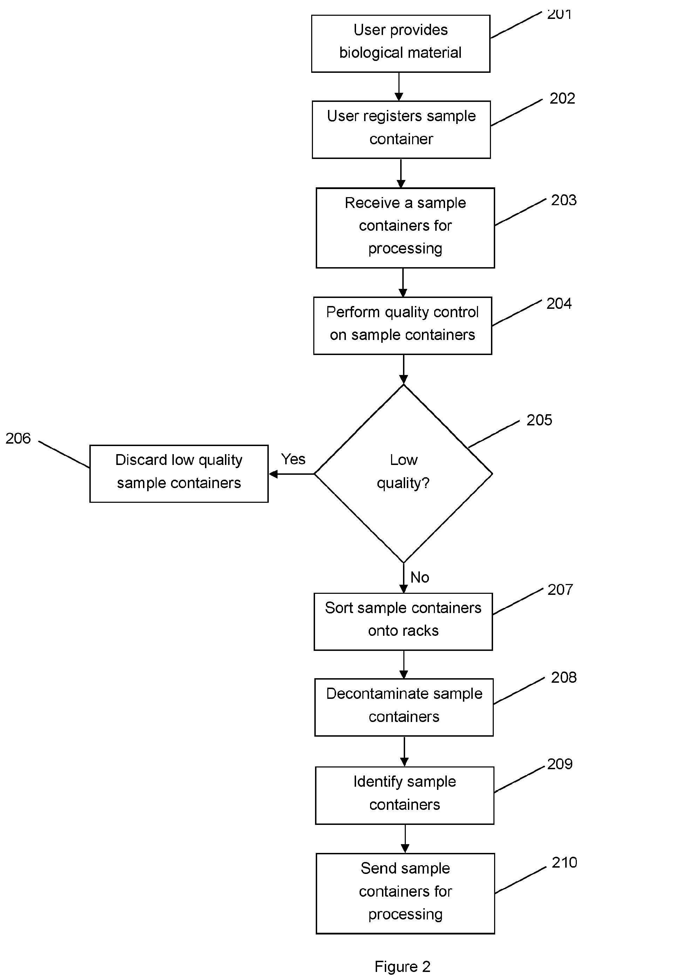

In a first step 101 a plurality of sample containers, each of which contains biological material provided by a patient, are received at a laboratory for processing. As will be described in more detail below with reference to Figure 2, step 101 may include a number of sub-steps.

After the plurality of sample containers have been received, a priority is assigned to each sample container in step 102. These priorities are typically used to indicate the stability of the biological material in each sample container, although they may also be based on other factors such as the urgency with which a test result is required, and as such are preferably based at least in part on the age of the biological material in the sample container, which is to say how much time has expired since a patient provided the biological material. Therefore, in addition to indicating how close the biological material is to expiry, with a higher priority indicating that the biological material is closer to expiry, the priority can be based on other factors. For example, as is discussed below, a sample container which is to be retested following an inconclusive result may be given a higher priority regardless of the stability of the biological material.

After priorities have been assigned to the biological samples in step 102, the assigned priorities are used in step 103 to queue the biological samples for analysis. The queueing of biological samples is based on the assigned priorities to ensure that higher priority samples are analysed before lower priority samples. As will be explained in more detail below, the queue samples include both samples which have not yet undergone analysis and samples for which further analysis is required. The samples requiring further analysis may have a higher priority, in which case these will be placed ahead of samples that have not yet undergone analysis.

As part of the queueing step 103, biological samples may be sorted into batches based on the priorities assigned to the biological samples. This typically involves grouping together biological samples which have been assigned similar priorities. For example, if each batch includes N samples then the N samples with the highest priorities might be sorted into the first batch, the N samples with the next highest priorities might be sorted into the next batch, and so on.

Sorting the samples into batches is particularly advantageous when analysis can be performed on multiple samples in parallel. For example, quantitative polymerase chain reaction (qPCR) analysis machines often perform qPCR analysis on multiple biological samples in parallel, and the samples are therefore sorted into batches to maximise throughput during analysis.

Another possibility is for the samples in a batch to be pooled into a single biological sample for analysis. This is beneficial when testing for the presence or absence of a biological factor, such as a virus, in samples provided by patients. If said factor was not present in the pooled sample, then a negative result indicating the absence of that biological factor could be associated with all of the biological samples in the batch. In this example, individual testing of biological samples would only be necessary in the event of a positive result indicating that the biological factor was present in one or more of the samples in the batch.

After queueing, a biological sample is extracted 104 from the biological material in each sample container. The extraction of biological samples in step 104 will be based on the form of the biological material and the sample containers. Often, liquid biological material is provided in biological sample tubes, such as test tubes, in which case the extraction of biological samples in step 104 comprises aspirating the biological material. The extraction of biological samples in step 104 occurs directly before analysis of the biological samples in step 105.

After analysis in step 105, the results of the analysis are then provided in step 106 in the form of a valid result or an inconclusive result. The expression "valid result" refers to a distinct result which can be associated with a specific biological sample. For example, if the biological samples are tested individually for the presence or absence of a biological factor then a valid result would be a positive or negative result associated with a specific biological sample. In the case of pooled samples in a batch, a valid result would be provided in cases where individual testing of the samples in the batch was not required. For example, if a negative result was provided for the pooled biological sample then this result could be associated with each of the biological samples in the batch. Conversely, a positive result may not indicate that the biological factor which has been tested for is present in all of the biological samples. In this case, it is not possible to associate the positive result with each of the biological samples in the batch and an inconclusive result would be issued. In the case that the samples in a batch have been pooled, the inconclusive result may also include an indication that those samples are not to be pooled again.

If an inconclusive result has not been provided, then step 107 directs the process to step 108 in which the valid result is provided to the patient, either directly or via an intermediary. The latter is preferable, with the intermediary providing any analysis of the result which might be required.

However, if an inconclusive result is provided, which indicates that further analysis of the biological sample is required, then step 107 directs the process to step 109 in which a new priority may be assigned to the sample container. The assigning of a new priority reflects that biological material may degrade over time. As such, the biological material in the sample container may be less stable after analysis of the extracted biological sample, in which case the priority of the sample container may need updating.

After step 109, the sample container is retrieved in step 110 and the process returns to step 103 in which the retrieved sample is queued for analysis along with the other sample containers. If a new priority has been assigned then this will be used in step 103. In preferred embodiments, when a repeat analysis is required the sample containers are given the highest priority and biological samples are extracted from the repeat sample containers before any of the newly received sample containers.

Figure 1 illustrates an exemplary process in which sample containers are frozen in step 111 after biological samples have been extracted in step 104, in which case step 110 includes thawing the sample container. In such embodiments, after a new biological sample has been extracted from the sample container in step 104, the sample container is frozen again in step 111. Freezing the sample containers improves the stability of the biological material and is therefore particularly advantageous in use cases where the biological material in the sample containers is unstable or in processes in which repeat analysis is likely.

Some examples not part of the present invention do not include a step 111 of freezing the sample container, although it is usual in such cases to nevertheless keep the sample containers chilled in cold storage.

In some embodiments, a decision may be taken after an inconclusive result is provided on whether to carry out further analysis. For example, it may be decided that the biological material in a sample container is too degraded for further useful analysis to be possible. In another example, if analysis of biological samples extracted from a sample container repeatedly gives an inconclusive result then this could indicate that useful analysis of the biological material in the sample container is not possible. As such, this decision could be based on the age of the biological material in the sample container, on the number of inconclusive results provided after analysis of biological samples extracted from the sample container, or on any other indicators that useful analysis of the biological material in the sample container is not possible.

Step 101 of receiving a plurality of sample containers will now be described in more detail with reference to Figure 2.

The process of receiving a plurality of sample containers begins with users providing biological material in step 201. In the following description of the process illustrated in Figure 2, the term "biological material" is used to refer to a sample provided by a user in a sample container. This is different from the biological samples referred to above in relation to Figure 1 which should be understood as a sample extracted from the biological material which has been provided by a user in a sample container. The sample container may contain a reagent prior to the provision of biological material by a user in step 201.

Returning to step 201, the biological material may be provided directly in a sample container or may be collected and then transferred to a sample container. For example, the biological material may be provided in the form of a nasal swap which is then provided in a sample container, such as a biological sample tube. As noted above, the sample container may contain a reagent prior to the provision of the biological material by the user in step 201.

In some embodiments multiple users may each provide biological material in the same sample container. This approach may be preferable, for example, when testing a large population, in which case the members of individual households might provide samples in the same sample container.

After providing biological material, a user (or users) will register the sample container in which the biological material has been provided in step 202. This allows a result provided after subsequent analysis to be provided to the user, such as in step 108, either directly or, more preferably, via an intermediary. The sample container will typically have been provided along with a barcode or other unique identifier which is registered by the user in step 202.

After step 202, the sample containers are received at a laboratory facility for processing in step 203. Note that this step is distinct from step 101, which occurs subsequent to step 210. As a first step after receiving the sample containers in step 203, the sample containers undergo quality control in step 204. This step may include assessing whether any sample containers have leaked or become damaged during transit. The step may also (or instead) include assessing whether the biological material in any of the sample containers has already degraded beyond the point where useful analysis is possible, typically by determining how much time has elapsed since the user registered the sample container in step 202.

Sample containers which are considered low quality, which is to say sample containers which are either damaged or which container biological material for which useful analysis is not considered possible, are discarded in step 206. This is typically also communicated to the user or users who provided the discarded samples.

The remaining samples are then identified in step 207 in order to associate the biological material in each sample container with the corresponding user. This step often involves scanning a barcode or other unique identifier provided on the sample container.

The remaining sample containers are then sorted onto racks in step 207 and decontaminated in step 208, as will be described in more detail below, after which the sample containers are identified in step 209 in order to associate the biological material in each sample container with the corresponding user or users. This step often involves scanning a barcode or other unique identifier provided on the sample container. Finally, the sample containers are sent for processing in step 210.

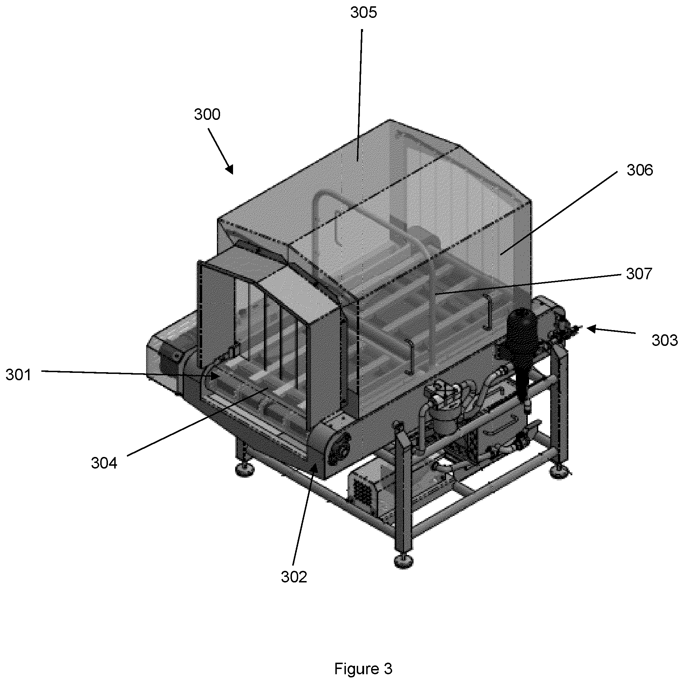

It should be noted that the sorting of sample containers onto racks in step 207 is distinct from the step of
Figure 3 shows a schematic diagram of a decontamination machine 300 as would be used in step 207 to decontaminate sample containers.

The decontamination machine 300 includes a conveyor 301 which runs in uniform manner, that is to say it runs in one direction at a consistent speed, from an idle end 302 to a drive end 303. The belt 304 of the conveyor 301 includes perforations (not shown) to allow for a decontamination fluid to be provided from below, while the upper 305 and side walls 306 of the machine 300 are impermeable to the decontamination fluid. The decontamination fluid is provided by misters 307 so as to create a mist within the decontamination machine 300.

It will be convenient at this point to describe the apparatus used to convey sample containers, typically in the form of biological sample tubes such as test tubes, through the machine.

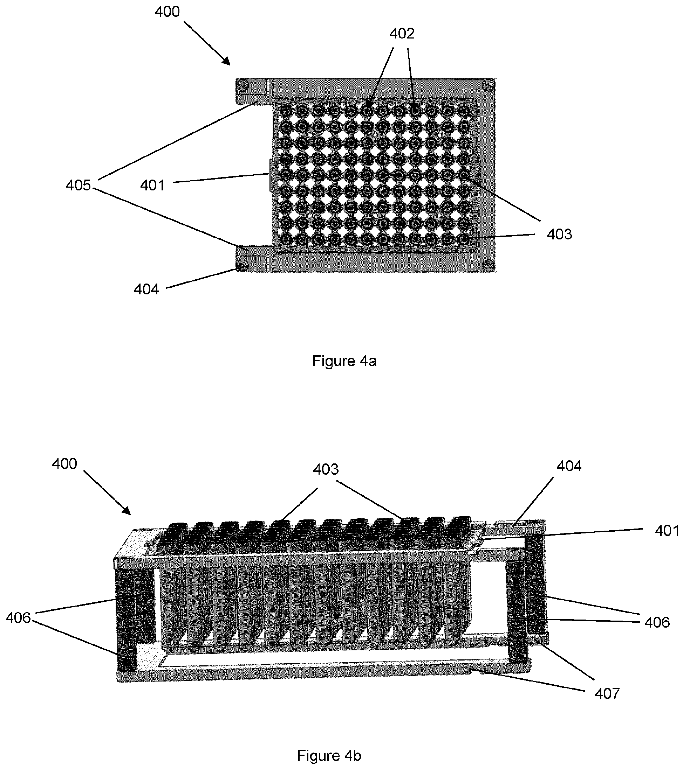

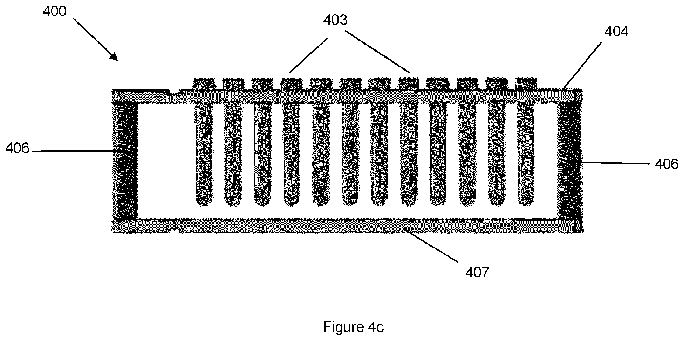

This apparatus 400 is shown in Figures 4a to 4c and includes a rack 401 comprising a plurality of apertures 402 for receiving biological sample tubes 403 and a frame 404 for supporting the rack 401. The rack 401 is removable and is typically supported only from below, thereby allowing the rack 401 to be lifted off of the frame 404.

The frame 404 itself includes support elements 405 for supporting the rack 401 from below, typically in the form of two or more lips 405 for supporting a corresponding two or more edges of the rack 401. The support elements 405 are connected to legs 406 which hold said support elements 405 sufficiently high above the surface of the conveyor belt 304 that biological sample tubes 403 provided in the rack 401 are suspended above the conveyor belt 304 surface, which is to say that the lower ends of the biological sample tubes 403 do not contact the conveyor belt 304. The skilled person will understand that biological sample tubes come in standard sizes, typically from around 80 to 110 mm in height, and the biological sample tubes 403 are therefore preferably held at a height of at least 80 mm from the conveyor belt 304, more preferably at a height of at least 100 mm from the conveyor belt 304, and still more preferably at a height of at least 120 mm from the conveyor belt 304. To this end, in a particularly preferable embodiment, the legs 406 are 121 mm in length.

The legs 406 may be connected at their lower ends, as shown in Figures 4a and 4b, by cross-support members 407, but they are advantageously separated from each other in order provide a space so as to expose biological sample tubes 403 received by the rack 401 to a fluid directed at the apparatus 400 from the sides. Likewise, a space is provided between any cross-support members 407 so as to expose biological sample tubes 403 received by the rack 401 to a fluid directed at the apparatus 400 from below.

Returning to the decontamination machine shown in Figure 3, biological sample tubes 403 are loaded into the rack401 , often while the rack 401 is supported by a different frame to that shown in Figures 4a and 4b. The rack 401 is then transferred to the frame 404 where it is supported by support elements 405, after which the apparatus 400 is conveyed through the decontamination machine 300. A mist may be provided prior to the apparatus 400 being conveyed, and in typical embodiments the mist is also provided by the misters 307 as the apparatus 400 is being conveyed. The spaces between the legs 406 and cross-support members 407 of the frame 404 expose the biological sample tubes 403 to the mist, which decontaminates the surfaces of the biological sample tubes 403.

The rack 401 is typically then transferred to another frame for further processing of the biological sample tubes 403.

## Claims

1. A method of monitoring and controlling the processing of biological samples, the method comprising the steps of:
receiving (101) a plurality of sample containers, each containing biological material;
assigning (102) a priority to each of the sample containers;
queueing (103) the sample containers for analysis based on the assigned priorities;
extracting (104) a biological sample from each of the plurality of sample containers based on said sample container's position in the queue;
analysing (105) each biological sample;
providing (106) either a valid result or an inconclusive result for each of the biological samples based on said analysing;
for each biological sample for which an inconclusive result has been provided, assigning (109) a new priority to the respective sample container and repeating the queueing, extracting, analysing, and providing steps; and **characterized in that** the method further comprises:
freezing (111) one or more sample containers of the plurality of sample containers after a biological sample has been extracted from said one or more sample containers; and
if an inconclusive result is provided, defrosting the sample container prior to extracting a new biological sample.

2. A method according to claim 1, wherein assigning (109) a new priority to a sample container corresponding to a biological sample for which an inconclusive result has been provided comprises increasing the priority assigned to said sample container.

3. A method according to any of claim 1 or claim 2, wherein the priority assigned to each sample container is based on the age of the biological material in said sample container.

4. A method according to any of claims 1 to 3, wherein queueing (103) the sample containers for analysis comprises sorting the sample containers into two or more batches of sample containers based on the respective priorities assigned to each of the sample containers.

5. A method according to claim 4, wherein analysing (105) each biological sample comprises pooling the biological samples extracted from the sample containers in at least one of said two or more batches of sample containers.

6. A method according to any of claims 1 to 5, wherein receiving (101) a plurality of sample containers comprises decontaminating the plurality of sample containers.

7. A method according to any of claims 1 to 6, wherein receiving (101) a plurality of sample containers comprises:
determining whether the biological material in any of the plurality of sample containers has expired, has been damaged, and/or has been contaminated; and
discarding any sample containers for which the biological material contained therein has expired, has been damaged, and/or has been contaminated.

8. A method according to any of claims 1 to 7, wherein receiving (101) a plurality of sample containers comprises:
determining whether any of the plurality of sample containers has been damaged; and
discarding any sample containers which have been damaged.

9. A method according to any of claims 1 to 8, wherein the plurality of sample containers are received at a first station of a sample prioritisation system; the step of assigning (102) a priority to each of the sample containers comprises, for each sample container, simultaneously registering the sample container and moving the sample container to from the first station to a second station of the sample prioritisation system; and the step of queuing (103) the sample containers occurs at the second station of the sample prioritisation system.

## Patentansprüche

1. Verfahren zum Überwachen und Steuern der Verarbeitung von biologischen Proben, wobei das Verfahren die folgenden Schritte umfasst:
Empfangen (101) einer Vielzahl von Probebehältern, die jeweils biologisches Material enthalten;
Zuweisen (102) einer Priorität zu jedem der Probebehälter;
Aufreihen (103) der Probebehälter zur Analyse auf der Grundlage der zugewiesenen Prioritäten;
Extrahieren (104) einer biologischen Probe aus jedem der Vielzahl von Probebehältern auf der Grundlage der Position des Probebehälters in der Warteschlange;
Analysieren (105) jeder biologischen Probe;
Bereitstellen (106) entweder eines gültigen Ergebnisses oder eines nicht eindeutigen Ergebnisses für jede der biologischen Proben auf der Grundlage des Analysierens;
für jede biologische Probe, für die ein nicht eindeutiges Ergebnis bereitgestellt wurde, Zuweisen (109) einer neuen Priorität zum jeweiligen Probebehälter und Wiederholen der Schritte des Aufreihens, Extrahierens, Analysierens und Bereitstellens; und **dadurch gekennzeichnet, dass** das Verfahren weiter Folgendes umfasst:
Einfrieren (111) eines oder mehrerer Probebehälter der Vielzahl von Probebehältern, nachdem eine biologische Probe aus dem einen oder den mehreren Probebehältern extrahiert wurde; und
wenn ein nicht eindeutiges Ergebnis bereitgestellt wird, Auftauen des Probebehälters vor dem Extrahieren einer neuen biologischen Probe.

2. Verfahren nach Anspruch 1, wobei das Zuweisen (109) einer neuen Priorität zu einem Probebehälter, der einer biologischen Probe entspricht, für die ein nicht eindeutiges Ergebnis bereitgestellt wurde, das Erhöhen der Priorität, die dem Probebehälter zugewiesen wird, umfasst.

3. Verfahren nach einem von Anspruch 1 oder Anspruch 2, wobei die jedem Probebehälter zugewiesene Priorität auf dem Alter des biologischen Materials im Probebehälter basiert.

4. Verfahren nach einem der Ansprüche 1 bis 3, wobei das Aufreihen (103) der Probebehälter zur Analyse das Sortieren der Probebehälter in zwei oder mehr Chargen von Probebehältern auf der Grundlage der jeweiligen Priorität, die jedem der Probebehälter zugewiesen wird, umfasst.

5. Verfahren nach Anspruch 4, wobei das Analysieren (105) jeder biologischen Probe das Zusammenlegen der aus den Probebehältern extrahierten biologischen Proben in mindestens einer der zwei oder mehr Chargen von Probebehältern umfasst.

6. Verfahren nach einem der Ansprüche 1 bis 5, wobei das Empfangen (101) einer Vielzahl von Probebehältern das Dekontaminieren der Vielzahl von Probebehältern umfasst.

7. Verfahren nach einem der Ansprüche 1 bis 6, wobei das Empfangen (101) einer Vielzahl von Probebehältern Folgendes umfasst:
Bestimmen, ob das biologische Material in irgendeinem der Vielzahl von Probebehältern abgelaufen ist, beschädigt worden ist und/oder kontaminiert worden ist; und
Entsorgen von jeglichen Probebehältern, für die das darin enthaltene biologische Material abgelaufen ist, beschädigt worden ist und/oder kontaminiert worden ist.

8. Verfahren nach einem der Ansprüche 1 bis 7, wobei das Empfangen (101) einer Vielzahl von Probebehältern Folgendes umfasst:
Bestimmen, ob irgendeiner der Vielzahl von Probebehältern beschädigt worden ist; und
Entsorgen von jeglichen Probebehältern, die beschädigt worden sind.

9. Verfahren nach einem der Ansprüche 1 bis 8, wobei die Vielzahl von Probebehältern an einer ersten Station eines Probepriorisierungssystems empfangen werden; der Schritt des Zuweisens (102) einer Priorität zu jedem der Probebehälter für jeden Probebehälter das gleichzeitige Registrieren des Probebehälters und das Bewegen des Probebehälters von der ersten Station zu einer zweiten Station des Probepriorisierungssystems umfasst; und der Schritt des Aufreihens (103) der Probebehälter an der zweiten Station des Probepriorisierungssystems erfolgt.

## Revendications

1. Procédé de surveillance et de commande du traitement d'échantillons biologiques, le procédé comprenant les étapes consistant à :
recevoir (101) une pluralité de récipients d'échantillon contenant chacun une matière biologique ;
attribuer (102) une priorité à chacun des récipients d'échantillon ;
mettre en file d'attente (103) les récipients d'échantillon pour une analyse sur la base des priorités attribuées ;
extraire (104) un échantillon biologique de chacun de la pluralité de récipients d'échantillon sur la base de la position dudit récipient d'échantillon dans la file d'attente ;
analyser (105) chaque échantillon biologique ;
fournir (106) soit un résultat valide, soit un résultat non concluant pour chacun des échantillons biologiques sur la base de ladite analyse ;
pour chaque échantillon biologique pour lequel un résultat non concluant a été fourni, attribuer (109) une nouvelle priorité au récipient d'échantillon respectif et répéter les étapes de mise en file d'attente, d'extraction, d'analyse et de fourniture ; et **caractérisé en ce qu'**il comprend en outre l'étape consistant :
à congeler (111) un ou plusieurs récipients d'échantillon de la pluralité de récipients d'échantillon après qu'un échantillon biologique a été extrait desdits un ou plusieurs récipients d'échantillon ; et
si un résultat non concluant est fourni, à décongeler le récipient d'échantillon avant l'extraction d'un nouvel échantillon biologique.

2. Procédé selon la revendication 1, dans lequel l'attribution (109) d'une nouvelle priorité à un récipient d'échantillon correspondant à un échantillon biologique pour lequel un résultat non concluant a été fourni comprend l'augmentation de la priorité attribuée audit récipient d'échantillon.

3. Procédé selon l'une quelconque de la revendication 1 ou la revendication 2, dans lequel la priorité attribuée à chaque récipient d'échantillon est basée sur l'âge de la matière biologique dans ledit récipient d'échantillon.

4. Procédé selon l'une quelconque des revendications 1 à 3, dans lequel la mise en file d'attente (103) des récipients d'échantillon pour une analyse comprend le triage des récipients d'échantillon en au moins deux lots de récipients d'échantillon sur la base des priorités respectives attribuées à chacun des récipients d'échantillon.

5. Procédé selon la revendication 4, dans lequel l'analyse (105) de chaque échantillon biologique comprend le regroupement des échantillons biologiques extraits des récipients d'échantillon dans au moins un desdits au moins deux lots de récipients d'échantillon.

6. Procédé selon l'une quelconque des revendications 1 à 5, dans lequel la réception (101) d'une pluralité de récipients d'échantillon comprend la décontamination de la pluralité de récipients d'échantillon.

7. Procédé selon l'une quelconque des revendications 1 à 6, dans lequel la réception (101) d'une pluralité de récipients d'échantillon comprend les étapes consistant à :
déterminer si la matière biologique dans l'un quelconque de la pluralité de récipients d'échantillon a expiré, a été endommagée et/ou a été contaminée ; et
éliminer tous les récipients d'échantillon pour lesquels la matière biologique contenue en leur sein a expiré, a été endommagée et/ou a été contaminée.

8. Procédé selon l'une quelconque des revendications 1 à 7, dans lequel la réception (101) d'une pluralité de récipients d'échantillon comprend les étapes consistant à :
déterminer si l'un quelconque de la pluralité de récipients d'échantillon a été endommagé ; et
éliminer tous les récipients d'échantillon qui ont été endommagés.

9. Procédé selon l'une quelconque des revendications 1 à 8, dans lequel la pluralité de récipients d'échantillon sont reçus au niveau d'un premier poste d'un système de priorisation d'échantillons ; l'étape d'attribution (102) d'une priorité à chacun des récipients d'échantillon comprend les étapes comprend les étapes consistant à, pour chaque récipient d'échantillon, à enregistrer simultanément le récipient d'échantillon et à déplacer le récipient d'échantillon depuis le premier poste vers un deuxième poste du système de priorisation d'échantillons ; et l'étape de mise en file d'attente (103) des récipients d'échantillon se déroule au niveau du deuxième poste du système de priorisation d'échantillons.
